# EUROPÄISCHE PATENTSCHRIFT

(11) **EP 0 559 069 B1**
(45) Veröffentlichungstag und Bekanntmachung des Hinweises auf die Patenterteilung: **19.06.1996**
(21) Anmeldenummer: 93102901.1
(22) Anmeldetag: 25.02.1993
(51) Int. Cl.: B42D 15/10, G06K 19/18

(54) **Wertdokument**
Security document
Document de valeur

(30) Priorität: 29.02.1992 DE 4206441
(43) Veröffentlichungstag der Anmeldung: 08.09.1993
(73) Patentinhaber: LEONHARD KURZ GMBH & CO., D-90763 Fürth (DE)
(72) Erfinder: Süss, Joachim, Dr., W-8510 Fürth/Bayern (DE); Süssner, Hubert, W-8507 Oberasbach (DE)
(74) Vertreter: LOUIS, PÖHLAU, LOHRENTZ & SEGETH

(56) Entgegenhaltungen:
- DE-C- 3 422 910
- US-A- 4 376 006
- US-A- 4 684 795
- PATENT ABSTRACTS OF JAPAN vol. 15, no. 310 (M-1144)8. August 1991 & JP-A-31 14 879 (TOPPAN PRINTING) 16 Mai 1991

## Beschreibung

Die Erfindung betrifft Wertdokumente, insbesondere Banknoten, Kreditkarten, Ausweise oder Tickets, welche mindestens an einer ihrer Oberflächen ein Sicherheitsmerkmal tragen, das einerseits eine Magnetschicht aus einer Dispersion magnetisierbarer Teilchen in einem Bindemittel und andererseits eine beugungsoptisch wirksame Sicherheitsschicht, insbesondere ein Hologramm oder eine computergenerierte Diffraktionsstruktur, eine Interferenzschicht oder ein Beugungsgitter umfasst, wobei die Sicherheitsschicht die Magnetschicht zumindest bereichsweise überlagert, die zur Magnetschicht weisende Oberfläche der Sicherheitsschicht eine beugungsoptisch wirksame, räumliche Struktur aufweist sowie mit einer reflektierenden, nicht magnetisierbaren Metallschicht versehen ist und zwischen Magnetschicht und Metallschicht eine Lackschicht vorgesehen ist.

Wertdokumente der vorstehend erläuterten Art sind beispielsweise bekannt aus der US 4 684 795. Dort ist auch bereits grundsätzlich die Herstellung solcher Wertdokumente mittels Prägefolien beschrieben. Eine detaillierte Erläuterung geeigneter Prägefolien mit einer Magnetschicht und einer beugungsoptisch wirksamen Sicherheitsschicht sind der DE 34 22 910 C1 zu entnehmen.

Bisher wird bei Herstellung derartiger Wertdokumente bzw. Heissprägefolien im allgemeinen so vorgegangen, dass die zur Verdeutlichung der beugungsoptisch wirksamen Struktur dienende, auf die entsprechend gemusterte Oberfläche der Sicherheitsschicht aufgebrachte, reflektierende Metallschicht von im Vakuum aufgedampftem Aluminium bzw. Aluminiumlegierungen gebildet ist. Die Verwendung von Aluminium für die reflektierende Metallschicht bringt jedoch unter Umständen erhebliche Probleme mit sich, insbesondere dann, wenn das entsprechende Wertdokument in feuchter Atmosphäre eingesetzt werden soll. Hierbei hat sich teilweise nämlich gezeigt, dass die Aluminiumschicht wenigstens punktweise zerstört wird oder sich zumindest hinsichtlich ihres Aussehens verändert, beispielsweise verfärbt. Hierdurch kann die Funktion des Sicherheitsmerkmals beeinträchtigt werden. Dies macht sich vor allem dann bemerkbar, wenn es sich bei der beugungsoptisch wirksamen Struktur der Sicherheitsschicht um eine maschinenlesbare Struktur, beispielsweise ein Hologramm oder eine computergenerierte Diffraktionsstruktur, handelt.

Untersuchungen haben gezeigt, dass die Zerstörung bzw. Beschädigung der Aluminiumschicht vermutlich darauf zurückzuführen ist, dass die magnetisierbaren Teilchen der Magnetschicht, bei denen es sich ja üblicherweise um Eisenoxide unterschiedlicher Oxidationsstufen handelt, mit dem Aluminium der reflektierenden Metallschicht unter Auslösung von Korrosion des Aluminiums reagieren. Der genaue Mechanismus für diese Reaktion ist nicht bekannt. Vermutlich sind die Schäden darauf zurückzuführen, dass die Eisenoxid-Pigmente, die als magnetisierbare Partikel verwendet werden, als Protonendonatoren wirken, wobei auch der Umstand eine Rolle spielt, dass die verwendeten Eisenoxid-Pigmente pH-Werte in einem Bereich zwischen 3,0 und 5,5 aufweisen. Hier können sich dann unter Umständen zwischen den magnetisierbaren Teilchen einerseits und dem als reflektierende Metallschicht dienenden Aluminium andererseits Lokalelemente mit entsprechender Zerstörung der Aluminiumschicht bilden.

Bei der Prägefolie gemäss DE 34 22 910 C1 ist zwischen der reflektierenden Metallschicht und der Magnetschicht eine Lack-Haftvermittlerschicht einer Dicke von etwa 0,3 bis 0,7 µm vorgesehen, die aus einem hochmolekularen PMMA-Harz und von Pigmenten gebildetem Mattierungsmittel besteht. Diese Haftvermittlerschicht kann jedoch eine Einwirkung der Magnetpartikel auf die reflektierende Metallschicht nicht mit der erforderlichen Sicherheit verhindern, insbesondere wegen der üblicherweise an der unteren Grenze liegenden Schichtstärke der vorerwähnten Haftvermittlerschicht.

Der Erfindung liegt daher die Aufgabe zugrunde, Wertdokumente der eingangs erwähnten Art so auszubilden, dass die bisher beobachteten Probleme der Zerstörung bzw. Veränderung der reflektierenden Metallschicht infolge entsprechender Einwirkung der magnetisierbaren Teilchen auf die reflektierende Metallschicht zuverlässig ausgeschaltet werden, d.h. das Wertdokument seine ursprünglichen Eigenschaften hinsichtlich der reflektierenden Metallschicht möglichst unverändert beibehält.

Zur Lösung dieser Aufgabe wird nach der Erfindung bei einem Wertdokument der eingangs erwähnten Art vorgeschlagen, derart vorzugehen, dass zwischen der Metallschicht und der Magnetschicht eine eine Einwirkung der magnetisierbaren Teilchen auf die Metallschicht verhindernde, einen pH-Wert von ≧ 7 aufweisende Barriereschicht angeordnet ist, die von einer Schicht aus organischen Polymeren gebildet ist, denen anorganische, Protonen adsorbierende Pigmente beigemischt sind, wobei die Barriereschicht eine Dicke von 0,5 bis 5 µm, vorzugsweise von 2 bis 3 µm, aufweist.

Gemäss der Erfindung wird somit der Einfluss der magnetisierbaren Teilchen der Magnetschicht auf die reflektierende Metallschicht dadurch verhindert, dass zwischen der Metallschicht und der Magnetschicht die zusätzliche, speziell aufgebaute Barriereschicht vorgesehen wird.

Als Polymere für die Barriereschicht können z.B. hochmolekulare Acrylharze, Polyvinylidenchlorid-Copolymere, PVC, PVC-Copolymere, Chlorkautschuk, Polyester und silikonmodifizierte Bindemittel verwendet werden. Als anorganische Pigmente kommen beispielsweise Silikate und/oder Titandioxid in Betracht. Eine derart zusammengesetzte Barriereschicht hinreichender Dicke bildet einen zuverlässigen Puffer bzw. ein zuverlässiges Adsorbermedium auf jeden Fall gegenüber Protonen, so dass deren Wanderung durch die Barriereschicht und eine entsprechende Schädigung der Metallschicht sicher verhindert werden. Die erfindungsgemäss vorgesehene Dicke der Barriereschicht genügt einerseits für eine zuverlässige Sicherung der reflektierenden Metallschicht gegenüber den magnetisierbaren Teilchen der Magnetschicht. Andererseits ist bei einer derart geringen Dicke der Barriereschicht nicht damit zu rechnen, dass die Lesbarkeit der in der Magnetschicht gespeicherten Daten irgendwie beeinträchtigt wird.

Als zusätzliche Sicherheit ist es erfindungsgemäß möglich, neben der Anordnung der speziellen Barriereschicht die Metallschicht aus Chrom, Kupfer, Silber oder Gold oder Legierungen aus wenigstens zweien dieser Metalle zu bilden, wodurch die Beständigkeit des Wertdokumentes gegen Umwelteinflüsse weiter verbessert wird.

In der US 4 376 006 ist zwar bereits ein magnetisches Aufzeichnungsmaterial beschrieben, bei dem eine Magnetschicht mittels einer Schicht aus nicht magnetischem Material überdeckt werden soll, um auf diese Weise die Magnetschicht unsichtbar zu machen bzw. das Aussehen des Aufzeichnungsmaterials zu verbessern. In dieser Druckschrift wird jedoch nirgends auf die Möglichkeit hingewiesen, daß die Magnetschicht zu einer Korrosion der reflektierenden Metallschicht führen könnte. In der US 4 376 006 werden vielmehr alle möglichen reflektierenden Metallschichten als gleichwertig bezeichnet, insbesondere Aluminium gleichzeitig mit Zinn, Gold und Silber als mögliches Material für die reflektierende Metallschicht erwähnt. Bei einer bestimmten Ausführungsform des Aufzeichnungsmaterials gemäß US 4 376 006 ist sogar zwischen der Magnetschicht und der reflektierenden Metallschicht eine Haftvermittlerschicht aus einem Kunstharz in einer Dicke von etwa 0,5 µm vorgesehen. Diese Schicht hat die Aufgabe, die Haftung der reflektierenden Metallschicht auf der Magnetschicht zu verbessern.

Gegenstand der Erfindung ist außerdem eine Prägefolie, insbesondere Heißprägefolie, zur Herstellung eines erfindungsgemäßen Wertdokumentes, die aus einem Trägerfilm und einer von diesem lösbaren Übertragungslage besteht, welche - ausgehend vom Trägerfilm - wenigstens eine beugungsoptisch wirksame, transparente, an ihrer dem Trägerfilm abgekehrten Oberfläche eine beugungsoptisch wirksame, räumliche Struktur aufweisende Lackschicht als Sicherheitsschicht, eine auf der räumlichen Struktur der Sicherheitsschicht angeordnete reflektierende Metallschicht, eine aus einer Dispersion magnetisierbarer Teilchen in einem Bindemittel bestehende Magnetschicht, eine zur Festlegung an einem Substrat dienende, gegebenenfalls von der Magnetschicht gebildete oder mit dieser kombinierte Kleberschicht sowie zwischen Metallschicht und Magnetschicht eine weitere Lackschicht aufweist, wobei diese Prägefolie sich entsprechend dem Wertdokument dadurch auszeichnet, daß zwischen der Metallschicht und der Magnetschicht eine entsprechende Barriereschicht in einer Dicke von 0,5 bis 5 µm, vorzugsweise von 2 bis 3 µm vorhanden ist.

Bevorzugte Ausführungsformen der Prägefolie sind Gegenstand der Ansprüche 5 bis 8.

Weitere Merkmale, Einzelheiten und Vorteile der Erfindung ergeben sich aus der folgenden Beschreibung von Ausführungsbeispielen einer mit einem Sicherheitsmerkmal nach der Erfindung versehenen Kreditkarte sowie einer zur Herstellung einer solchen Karte bzw. eines solchen Wertdokuments geeigneten Prägefolie.

In der Zeichnung zeigen -:
- Figur 1: eine Draufsicht auf eine Kreditkarte mit einem Sicherheitsmerkmal nach der Erfindung;
- Figur 2: einen Schnitt nach Linie II-II durch die Karte der Figur 1 und
- Figur 3: einen abschnittweisen, schematisierten Schnitt durch eine Heissprägefolie.

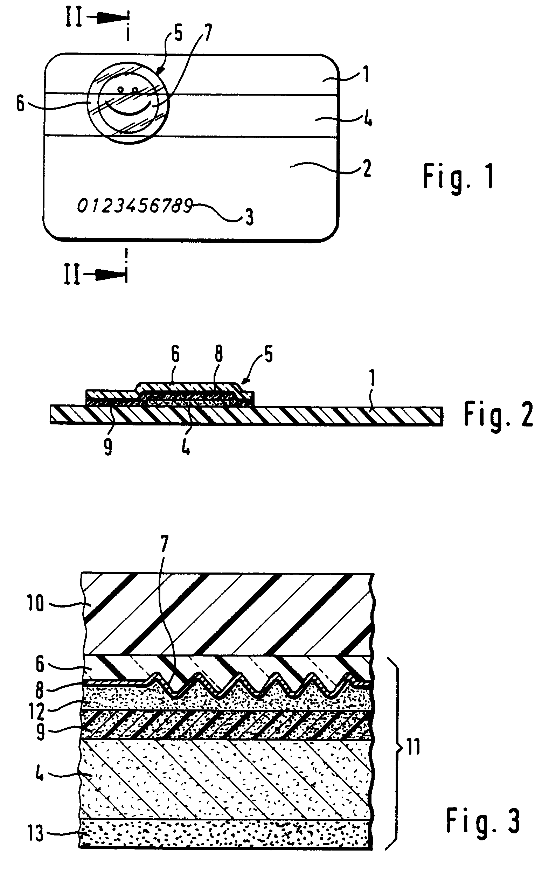

Die in Figur 1 gezeigte Kreditkarte ist eine übliche Kunststoffkarte 1, die auf ihrer Vorderseite beispielsweise in geprägten Buchstaben den Namen 2 des Karteninhabers sowie eine Kennziffer 3 trägt. Die Kunststoffkarte 1 ist ausserdem auf ihrer Vorderseite mit einem Sicherheitsmerkmal versehen, welches einerseits einen über die gesamte Breite der Karte verlaufenden Magnetstreifen 4 und andererseits ein optisches Sicherheitsmerkmal 5 umfasst, welches, wie Figuren 1 und 2 deutlich erkennen lassen, teilweise den Magnetstreifen 4 überlagert, teilweise jedoch auch (in Figur 1, oben; in Figur 2, links) über den Magnetstreifen vorsteht.

Das optische Sicherheitsmerkmal 5 ist beispielsweise gemäss dem in der US-PS 4 684 795 beschriebenen Sicherheitsmerkmal ausgestaltet. Es besteht aus einer transparenten optisch wirksamen Sicherheitsschicht 6, die zumindest bereichsweise (im inneren Bereich der Figur 1) an ihrer Unterseite mit einer beugungsoptisch wirksamen Struktur 7 versehen ist.

Zumindest im Bereich der beugungsoptisch wirksamen Struktur 7 ist die beugungsoptisch wirksame Sicherheitsschicht 6 mit einer Metallschicht 8 versehen, die beispielsweise auf die beugungsoptisch wirksame Struktur 7 der Sicherheitsschicht 6 durch Aufdampfen im Vakuum aufgebracht ist. Insoweit stimmt das Wertdokument der Figuren 1 und 2 im wesentlichen mit dem in der US-PS 4 684 795 beschriebenen überein.

Im Unterschied zu dem bekannten Wertdokument ist nun aber bei dem Dokument gemäss Figuren 1 und 2 zwischen der Magnetschicht 4 und der Metallschicht 8 eine Barriereschicht 9 vorgesehen, die beispielsweise eine Stärke zwischen 0,5 und 5 µm, vorzugsweise von 2 bis 3 µm haben kann. Die Barriereschicht 9 hat den Zweck, eine Einwirkung der in der Magnetschicht 4 vorhandenen Magnetpigmente, bei denen es sich üblicherweise um Eisenoxide handelt, auf die Metallschicht 8 zu verhindern. Hinsichtlich der möglichen Zusammensetzung dieser Barriereschicht sowie der weiteren Schichten des Wertdokumentes gemäss Figuren 1 und 2 wird auf die folgende, nähere Erläuterung der Prägefolie gemäss Figur 3 verwiesen.

Zusätzlich zur Anbringung der Barriereschicht 9 ist es möglich, die Metallschicht 8 aus einem Metall herzustellen, welches mit den magnetisierbaren Teilchen der Magnetschicht 4 nicht reagiert, vorzugsweise aus Chrom, Kupfer, Silber oder Gold oder einer Legierung von wenigstens zweien dieser Metalle.

Die Anbringung der verschiedenen Schichten des Wertdokuments bzw. der Kreditkarte der Figuren 1 und 2 kann in unterschiedlicher Weise erfolgen. Beispielsweise ist es ohne weiteres möglich, zuerst die Magnetschicht 4 auf die Kunststoffkarte 1 aufzubringen, dann, beispielsweise in einem Druckvorgang, die Barriereschicht 9 zu applizieren. Diese Barriereschicht 9 kann dann, wenn sie aus einem geeigneten Material besteht, mit einer Metallschicht 8, ggf. auch nur partiell, nach an sich bekannten Verfahren bedampft werden. Hieran anschliessend muss dann die räumliche Struktur im Bereich der Metallschicht 8 erzeugt werden, wobei es natürlich genauso möglich ist, diese räumliche Stuktur auch bereits vor dem Aufdampfen der Metallschicht auszubilden. Abschliessend wird dann die Sicherheitsschicht 6, z.B. ebenfalls in einem Druckverfahren, aufgebracht.

Wesentlich einfacher kann allerdings ein Wertdokument gemäss Figuren 1 und 2 hergestellt werden, wenn die sämtlichen Schichten, nämlich die Magnetschicht 4, die Barriereschicht 9, die Metallschicht 8 und die Schutzschicht 6 in einem Arbeitsgang mit Hilfe einer Prägefolie gemäss Figur 3 appliziert werden. Theoretisch ist es allerdings auch möglich, zwei getrennte Prägefolien zu verwenden, von denen die eine im wesentlichen nur die Magnetschicht, die andere dagegen die Barriereschicht, die Metallschicht und die Schutzschicht umfasst. So müsste man z.B. bei Herstellung der Kreditkarte gemäss Figur 1 mittels Prägefolien vorgehen.

In Figur 3 ist eine Prägefolie in einem schematischen Ausschnitt gezeigt, die zur Anbringung des gesamten Sicherheitsmerkmals, d.h. sowohl zur Aufbringung der Magnetschicht 4 als auch der Sicherheitsschicht 6 mit der reflektierenden Metallschicht 8 in einem Schritt geeignet ist.

Die Magnetfolie der Figur 3 umfasst in an sich bekannter Weise einen Trägerfilm 10. An diesem ist, beispielsweise über eine in der Zeichnung nicht dargestellte, vorzugsweise aus Wachs bestehende Ablöseschicht, eine insgesamt mit 11 bezeichnete Übertragungslage angeordnet. Die Übertragungslage 11 umfasst, ausgehend vom Trägerfilm 10, einerseits eine transparente Decklackschicht 6, die als beugungsoptisch wirksame Sicherheitsschicht dient. Diese Decklackschicht bzw. Sicherheitsschicht 6 ist an ihrer vom Trägerfilm 10 wegweisenden Oberfläche zumindest bereichsweise räumlich so strukturiert, dass sie beugungsoptische Wirkungen entfalten kann. Beispielsweise ist die Sicherheitsschicht 6 mit einer Struktur 7 in Form eines Hologramms oder einer computergenerierten Diffraktionsstruktur, einer Interferenzschicht oder eines Beugungsgitters versehen. Die Struktur 7 wird im allgemeinen in die auf dem Trägerfilm 10 aufgebrachte Sicherheits-Lackschicht 6 eingeprägt, wobei hier der die Schicht 6 bildende Lack entweder ein thermoplastischer Lack ist oder ein vernetzender Lack, der zum Zeitpunkt der Einprägung der Struktur 7 noch nicht völlig ausgehärtet sein kann.

Auf die die Struktur 7 tragende Oberfläche der Schicht 6 wird dann eine Metallschicht 8 im Vakuum aufgebracht, z.B. aufgedampft. Um sicherzustellen, dass an dieser Metallschicht 8, die reflektiert, die weiteren Schichten zuverlässig haften, wird vor Aufbringung der weiteren Schicht eine Haftvermittlerschicht 12 aufgebracht. An diese Haftvermittlerschicht 12 schliessen sich dann an die Barriereschicht 9, die Magnetschicht 4 sowie eine zur Festlegung der Übertragungslage 11 auf einem Substrat dienende Kleberschicht 13, wobei allerdings diese Kleberschicht 13 auch entfallen kann, wenn die Magnetschicht 4 entsprechende Eigenschaften aufweist.

Zu der Figur 3 sei im übrigen darauf hingewiesen, dass in ihr die jeweiligen Schichtdicken nicht massstabgerecht dargestellt sind. Die Sicherheitsschicht 6 besitzt im Normalfall eine Dicke von etwa 0,3 bis 1,2 µm. Die Metallschicht 8 aus Chrom, Kupfer, Silber oder Gold bzw. entsprechenden Legierungen ist in an sich bekannter Weise im Vakuum aufgedampf und hat eine Stärke von 0,01 bis 0,04 µm. Die Haftvermittlerschicht 12 wird üblicherweise in einer Stärke von 0,2 bis 0,7 µm aufgetragen. Die Barriereschicht 9 hat, wie bereits erwähnt, eine Dicke von 0,5 bis 5 µm. Die Magnetschicht hat üblicherweise eine Stärke von 4 bis 12 µm, vorzugsweise von etwa 9 µm. Die Kleberschicht entspricht in ihrer Stärke etwa der Dicke der Sicherheitsschicht 6.

Das Aufbringen der verschiedenen Schichten erfolgt mit den von der Prägefolien-Herstellung her bekannten Verfahren, wie sie beispielsweise in der DE 34 22 910 C1 beschrieben sind. Dabei wird als Trägerfilm z.B. eine Polyesterfolie einer Stärke von 19 bis 23 µm verwendet, auf die dann die verschiedenen Schichten mittels Tiefdruckwalzen aufgetragen werden. Jeweils nach Aufbringung der einzelnen Schichten erfolgt die ggf. erforderliche Trocknung. Die räumliche Struktur 7 der Sicherheitsschicht 6 wird entweder mittels rotierendem Prägezylinder oder durch Hubprägung erzeugt.

Die verschiedenen Schichten der Prägefolie der Figur 3 können wie folgt zusammengsetzt sein -:

### Schutzlack- bzw. Sicherheitsschicht 6 -:

| Komponente | Gew.-Teile |
|---|---|
| hochmolekulares PMMA-Harz | 2.000 |
| Silikonalkyd ölfrei | 300 |
| nichtionisches Netzmittel | 50 |
| Methylethylketon | 750 |
| niedrigviskose Nitrocellulose | 12.000 |
| Toluol | 2.000 |
| Diacetonalkohol | 2.500 |

### Metallschicht 8 -:

Im Vakuum aufgedampfte Schicht aus Chrom, Kupfer, Silber oder Gold bzw. Legierungen hieraus.

### Haftvermittlerschicht 12 -:

| Komponente | Gew.-Teile |
|---|---|
| hochmolekulares PMMA-Harz | 1.200 |
| Methylethylketon | 3.400 |
| Toluol | 1.000 |
| Mattierungsmittel | 100 |

### Barriereschicht 9 -:

| Komponente | Gew.-Teile |
|---|---|
| Methylethylketon | 30 |
| Toluol | 35 |
| Ethylalkohol | 15 |
| Vinylchlorid-Vinylacetat-Copolymeres (FP : > 65 °C) | 11 |
| Ungesättigtes Polyesterharz (Fp : 100 °C, d = 1,24 g/cm³) | 3 |
| Silikonpolyesterharz (D = 1,18 g/cm³) | 2 |
| Hydrophobierte Kieselsäure (pH ≧ 7 einer 5%igen Slurry in H₂O) | 4 |

### Magnetschicht 4 -:

Diese besteht aus einer Dispersion nadelförmigen γ-Fe₂O₃-Magnetpigments in einem Polyurethanbindemittel, verschiedenen Lackhilfsmitteln und einem Lösungsmittelgemisch aus Methylethylketon und Tetrahydrofuran.

Die Magnetschicht muss allerdings nicht unbedingt diese Zusammensetzung haben. Anstelle der Fe₂O₃-Pigmente können z.B. auch andere Magnetpigmente, beispielsweise Co-dotierte magnetische Eisenoxide oder sonstige feindispergierte magnetische Materialien (Sr, Ba-Ferrite) verwendet werden. Die Bindemittelkombination der Magnetschicht kann ggf. auch so gewählt werden, dass auf die Haftvermittlerschicht 12 verzichtet werden kann, weil sich direkt eine gute Haftung unmittelbar auf dem Metall 8 ergibt, was bei Wegfall der Barriereschicht von Bedeutung sein kann.

### Kleberschicht 13 -:

Bei der Kleberschicht 13 kann es sich z.B. um eine an sich bekannte Heissklebeschicht handeln. Die Anbringung dieser Schicht ist jedoch nicht immer erforderlich. Dies hängt von der Zusammensetzung des Substrats, auf das die Prägefolie geprägt werden soll, ab. Wenn das Substrat beispielsweise aus PVC besteht, wie dies bei Kreditkarten meist der Fall ist, kann normalerweise auf eine besondere Heissklebeschicht verzichtet werden.

Zur Aufbringung der Prägefolie gemäss Figur 3 wird diese mit der Übertragungslage 11 voran auf die Kunststoffkarte 1 oder ein sonstiges, entsprechend zu sicherndes Dokument, aufgelegt und dann unter Einwirkung von Wärme gegen dieses Dokument gepresst. Dabei verbindet sich einerseits über die Kleberschicht 13 bzw. die entsprechend klebrige Magnetschicht 4 die Übertragungslage 11 mit der entsprechenden Oberfläche des zu sichernden Dokumentes. Andererseits löst sich infolge der Wärmeeinwirkung die Übertragungslage 11 vom Trägerfilm 10. Dieses Lösen wird besonders dann erleichtert, wenn eine zusätzliche, wachsartige Ablöseschicht zwischen der Übertragungslage 11 und dem Trägerfilm 10 vorhanden ist.

## Patentansprüche

1. Wertdokument, insbesondere Banknote, Kreditkarte, Ausweis oder Ticket, welches mindestens an einer seiner Oberflächen ein Sicherheitselement (5) trägt, das einerseits eine Magnetschicht (4) aus einer Dispersion magnetisierbarer Teilchen in einem Bindemittel und andererseits eine beugungsoptisch wirksame Sicherheitsschicht (6), insbesondere ein Hologramm oder eine computergenerierte Diffraktionsstruktur, eine Interferenzschicht oder ein Beugungsgitter umfasst,
wobei die Sicherheitsschicht die Magnetschicht zumindest bereichsweise überlagert, die zur Magnetschicht weisende Oberfläche der Sicherheitsschicht eine beugungsoptische wirksame, räumliche Struktur (7) aufweist sowie mit einer reflektierenden, nicht magnetisierbaren Metallschicht (8) versehen ist, und zwischen Magnetschicht und Metallschicht eine Lackschicht vorgesehen ist,
**dadurch gekennzeichnet**,
dass zwischen der Metallschicht (8) und der Magnetschicht (4) eine eine Einwirkung der magnetisierbaren Teilchen auf die Metallschicht verhindernde, einen pH-Wert von ≧ 7 aufweisende Barriereschicht (9) angeordnet ist, die von einer Schicht aus organischen Polymeren gebildet ist, denen anorganische, Protonen adsorbierende Pigmente beigemischt sind, wobei die Barriereschicht (9) eine Dicke von 0,5 bis 5 µm aufweist.

2. Wertdokument nach Anspruch 1,
**dadurch gekennzeichnet**,
dass die Barriereschicht (9) eine Dicke von 2 bis 3 µm aufweist.

3. Wertdokument nach Anspruch 1 oder 2,
**dadurch gekennzeichnet**,
dass die Metallschicht (8) von Chrom, Kupfer, Silber oder Gold oder Legierungen aus wenigstens zweien dieser Metalle gebildet ist.

4. Prägefolie, insbesondere Heissprägefolie, zur Herstellung eines Wertdokumentes nach einem der Ansprüche 1 bis 3, die aus einem Trägerfilm (10) und einer von diesem lösbaren Übertragungslage (11) besteht, welche - ausgehend vom Trägerfilm - wenigstens eine beugungsoptisch wirksame, transparente, an ihrer dem Trägerfilm abgekehrten Oberfläche eine beugungsoptisch wirksame, räumliche Struktur (7) aufweisende Lackschicht (6) als Sicherheitsschicht, eine auf der räumlichen Struktur der Sicherheitsschicht angeordnete,
reflektierende Metallschicht (8), eine aus einer Dispersion magnetisierbarer Teilchen in einem Bindemittel bestehende Magnetschicht (4), eine zur Festlegung an einem Substrat dienende, ggf. von der Magnetschicht gebildete oder mit dieser kombinierte Kleberschicht (13) sowie zwischen Metallschicht und Magnetschicht eine weitere Lackschicht aufweist,
**dadurch gekennzeichnet**,
dass zwischen der Metallschicht (8) und der Magnetschicht (4) eine eine Einwirkung der magnetisierbaren Teilchen auf die Metallschicht verhindernde, einen pH-Wert von ≧ 7 aufweisende Barriereschicht (9) angeordnet ist, die von einer Schicht aus organischen Polymeren gebildet ist, denen anorganische, Protonen adsorbierende Pigmente beigemischt sind, wobei die Barriereschicht (9) eine Dicke von 0,5 bis 5 µm aufweist.

5. Prägefolie nach Anspruch 4,
**dadurch gekennzeichnet**,
dass die Barriereschicht (9) eine Dicke von 2 bis 3 µm aufweist.

6. Prägefolie nach einem der Ansprüche 4 oder 5,
**dadurch gekennzeichnet**,
dass die Metallschicht (8) auf die beugungsoptisch wirksame Struktur (7) der Sicherheitsschicht (6) im Vakuum aufgebracht, vorzugsweise aufgedampft ist.

7. Prägefolie nach einem der Ansprüche 4 bis 6,
**dadurch gekennzeichnet**,
dass die Metallschicht (8) von Chrom, Kupfer, Silber oder Gold oder Legierungen aus wenigstens zweien dieser Metalle gebildet ist.

8. Prägefolie nach einem der Ansprüche 4 bis 7,
**dadurch gekennzeichnet,**
dass zwischen der Metallschicht (8) und der Magnetschicht (4) oder der Barriereschicht (9) unmittelbar an die Metallschicht (8) anschliessend eine Haftvermittlerschicht (12) vorgesehen ist.

## Claims

1. Security document, in particular a banknote, credit card, identity card or ticket which on at least one of its surfaces bears a security element (5) which comprises on the one hand a magnetic layer (4) of a dispersion of magnetizable particles in a binder and on the other hand an optically diffractive security layer (6), in particular a hologram or a computer-generated diffraction structure, an interference layer or a diffraction grating, where the security layer covers the magnetic layer at least in places, the surface of the security layer facing the magnetic layer has an optically diffractive three-dimensional structure (7) and is provided with a reflective non-magnetizable metal layer (8), and a layer of coating composition is provided between the magnetic layer and the metal layer; characterized in that between the metal layer (8) and the magnetic layer (4) there is arranged a barrier layer (9) having a pH of ≧ 7 which layer prevents the magnetizable particles from acting on the metal layer and is composed of a layer of organic polymers into which inorganic, proton-adsorbing pigments are mixed, with the barrier layer (9) having a thickness of from 0.5 to 5 µm.

2. Security document according to Claim 1, characterized in that the barrier layer (9) has a thickness of from 2 to 3 µm.

3. Security document as claimed in Claim 1 or 2, characterized in that the metal layer (8) is composed of chromium, copper, silver or gold, or alloys of at least two of these metals.

4. Stamping sheet, in particular hot stamping sheet, for producing a security document according to any of Claims 1 to 3, which stamping sheet comprises a support film (10) and a transfer lamina (11) detachable therefrom which has, starting out from the support film, at least one optically diffractive transparent layer of coating composition (6) having, on its surface facing away from the support film, an optically diffractive three-dimensional structure (7) as security layer, a reflective metal layer (8) arranged on the three-dimensional structure of the security layer, a magnetic layer (4) comprising a dispersion of magnetizable particles in a binder, an adhesive layer (13) serving for fixing to a substrate and if desired formed by the magnetic layer or combined therewith, and also a further layer of coating composition between the metal layer and the magnetic layer; characterized in that between the metal layer (8) and the magnetic layer (4) there is arranged a barrier layer (9) having a pH of ≧ 7 which layer prevents the magnetizable particles from acting on the metal layer and is composed of a layer of organic polymers into which inorganic, proton-adsorbing pigments are mixed, with the barrier layer (9) having a thickness of from 0.5 to 5 µm.

5. Stamping sheet according to Claim 4, characterized in that the barrier layer (9) has a thickness of from 2 to 3 µm.

6. Stamping sheet according to either Claim 4 or 5, characterized in that the metal layer (8) is applied in vacuo, preferably vapour deposited, onto the optically diffractive structure (7) of the security layer (6).

7. Stamping sheet according to any of Claims 4 to 6, characterized in that the metal layer (8) is composed of chromium, copper, silver or gold, or alloys of at least two of these metals.

8. Stamping sheet according to any of Claims 4 to 7, characterized in that between the metal layer (8) and the magnetic layer (4) or the barrier layer (9) there is provided a bonding layer (12) directly adjacent to the metal layer (8).

## Revendications

1. Document de valeur, en particulier billet de banque, carte de crédit, pièce d'identité ou titre de transport, qui porte au moins sur une de ses surfaces un élément de sécurité (5), qui comporte, d'une part, une couche magnétique (4) à base d'une dispersion de particules magnétisables dans un liant et, d'autre part, une couche de sécurité (6) optiquement active par diffraction, en particulier un hologramme ou une structure de diffraction engendrée par ordinateur, une couche d'interférence ou un réseau de diffraction, la couche de sécurité étant superposée au moins par zones à la couche magnétique, la surface, tournée vers la couche magnétique, de la couche de sécurité présentant une structure spatiale (7), optiquement active par diffraction, et étant pourvue d'une couche métallique (8) réflectrice, non magnétisable, une couche de vernis étant prévue entre la couche magnétique et la couche métallique,
caractérisé en ce que, entre la couche métallique (8) et la couche magnétique (4), est agencée une couche de barrière (9) qui empêche une action des particules magnétisables sur la couche métallique, présente une valeur de pH de ≧ 7 et est formée d'une couche à base de polymères organiques auxquels sont mêlés des pigments inorganiques, adsorbant des protons, la couche de barrière (9) présentant une épaisseur de 0,5 à 5 µm.

2. Document de valeur suivant la revendication 1, caractérisé en ce que la couche de barrière (9) présente une épaisseur de 2 à 3 µm.

3. Document de valeur suivant l'une des revendications 1 et 2, caractérisé en ce que la couche métallique (8) est formée de chrome, de cuivre, d'argent ou d'or ou d'alliages d'au moins deux de ces métaux.

4. Feuille d'estampage, en particulier feuille d'estampage à chaud, pour la fabrication d'un document de valeur suivant l'une des revendications 1 à 3, qui est constituée d'un film de support (10) et d'une couche de transmission (11) détachable de ce dernier, laquelle, en partant du film de support, présente au moins une couche de vernis (6) optiquement active par diffraction, transparente, et présentant sur sa surface tournée à l'opposé du film de support une structure spatiale (7) optiquement active par diffraction, comme couche de sécurité, une couche métallique (8) réflectrice, qui est agencée sur la structure spatiale de la couche de sécurité, une couche magnétique (4) qui est constituée d'une dispersion de particules magnétisables dans un liant, une couche de colle (13) qui sert à la fixation sur un substrat, est éventuellement formée de la couche magnétique ou est combinée à celle-ci, ainsi qu'une autre couche de vernis entre la couche métallique et la couche magnétique, caractérisée en ce que, entre la couche métallique (8) et la couche magnétique (4), est agencée une couche de barrière (9) qui empêche une action des particules magnétisables sur la couche métallique, présente une valeur de pH de ≧ 7 et est formée d'une couche de polymères organiques auxquels sont mêlés des pigments inorganiques, adsorbant des protons, la couche de barrière (9) présentant une épaisseur de 0,5 à 5 µm.

5. Feuille d'estampage suivant la revendication 4, caractérisée en ce que la couche de barrière (9) présente une épaisseur de 2 à 3 µm.

6. Feuille d'estampage suivant l'une des revendications 4 et 5, caractérisée en ce que la couche métallique (8) est appliquée sous vide, de préférence vaporisée, sur la structure optiquement active par diffraction (7) de la couche de sécurité (6).

7. Feuille d'estampage suivant l'une des revendications 4 à 6, caractérisée en ce que la couche métallique (8) est formée de chrome, de cuivre, d'argent ou d'or ou d'alliages d'au moins deux de ces métaux.

8. Feuille d'estampage suivant l'une des revendications 4 à 7, caractérisée en ce qu'une couche d'agent d'adhésion (12) est prévue directement raccordée à la couche métallique (8), entre la couche métallique (8) et la couche magnétique (4) ou la couche de barrière (9).
